# EUROPEAN PATENT APPLICATION

(11) **EP 3 467 648 A1**
(43) Date of publication of application: **10.04.2019**
(21) Application number: 17809639.2
(22) Date of filing: 26.05.2017
(51) Int. Cl.: G06F 9/44

(54) **METHOD, DEVICE, APPARATUS AND SYSTEM FOR DISPLAYING DYNAMIC LIST**

(30) Priority: 07.06.2016 CN 201610403625
(71) Applicant: Alibaba Group Holding Limited, Grand Cayman (KY)
(72) Inventor: FU, Xiaozhen, Hangzhou Zhejiang 311121 (CN)
(74) Representative: Conroy, John
(86) International application number: PCT/CN2017/086052
(87) International publication number: WO 2017/211200

(57) **Abstract**

The present application discloses a method, device, apparatus, and system for displaying a dynamic list, and the method includes the following: obtaining an information item in a dynamic list corresponding to an account and an information item label; matching an information item label with an account label; and performing predetermined display processing on a matched information item that has the same label as the account. Predetermined display processing is performed on the matched information item that has the same label as the account, so that a user can quickly browse preferred content.

## Description

The present application claims priority to Chinese Patent Application No. 201610403625.1, filed on June 7, 2016 and entitled "METHOD, DEVICE, APPARATUS, AND SYSTEM FOR DISPLAYING DYNAMIC LIST", which is incorporated here by reference in its entirety.

### TECHNICAL FIELD

The present application relates to the field of Internet technologies, and in particular, to a method, device, apparatus, and system for displaying a dynamic list.

### BACKGROUND

Currently, many Internet products have subscription functions. After a user subscribes to an Internet product, a dynamic list can be generated for the user to browse. Different users' dynamic lists can be different from each other. In addition, though different users may be interested in the same content, weights corresponding to the same content can be different for different people. How to better select content that different users subscribe is important.

In an Internet product (e.g., a website or an application program), each user account can be followed by many other accounts. As such, a dynamic list of the user account may include many content items, and the content items are constantly updated and listed based on their last updated time. A user may need to search for an interested content item from lots of content items. The search process can be slow, and the user obtains the preferred content with low efficiency.

### SUMMARY

Implementations of the present application provide a method, a device, an apparatus, and a system for displaying a dynamic list, to resolve a technical problem in the existing technology that a user obtains preferred content with low efficiency when browsing a dynamic list.

An implementation of the present application discloses a method for displaying a dynamic list, including the following: obtaining an information item in a dynamic list corresponding to an account and the information item label; matching an information item label with an account label; and performing predetermined display processing on a matched information item that has the same label as the account.

An implementation of the present application discloses an apparatus for displaying a dynamic list, including an acquisition module, configured to obtain an information item in a dynamic list corresponding to an account and the information item label; a matching module, configured to match an information item label with an account label; and a display module, configured to perform predetermined display processing on a matched information item that has the same label as the account.

An implementation of the present application further provides a terminal device, including a processor and a memory configured to store an instruction that can be executed by the processor. The instruction that can be executed by the processor includes the following: obtaining an information item in a dynamic list corresponding to an account and an information item label; matching an information item label with an account label; and performing predetermined display processing on a matched information item that has the same label as the account.

An implementation of the present application further provides a mobile device, including a processor and a communications component. The processor is coupled to the communications component. The communications component is configured to obtain an information item in a dynamic list corresponding to an account and an information item label. The processor is configured to match an information item label with an account label, and perform predetermined display processing on a matched information item that has the same label as the account.

An implementation of the present application further provides a computer device, including a processor and a network adapter. The processor is coupled to the network adapter. The network adapter is configured to obtain an information item in a dynamic list corresponding to an account and an information item label. The processor is configured to match an information item label with an account label, and perform predetermined display processing on a matched information item that has the same label as the account.

An implementation of the present application further provides a terminal device used in a means of transportation, including an embedded processor and an embedded communications apparatus. The embedded processor is coupled to the embedded communications apparatus. The embedded communications apparatus is configured to obtain an information item in a dynamic list corresponding to an account and an information item label. The embedded processor is configured to match an information item label with an account label, and perform predetermined display processing on a matched information item that has the same label as the account.

An implementation of the present application further provides a user interface system, including a processing component and an input component. The processing component is coupled to the input component. The input component is configured to obtain an information item in a dynamic list corresponding to an account and an information item label. The processing component is configured to match an information item label with an account label, and perform predetermined display processing on a matched information item that has the same label as the account.

The at least one previous technical solution used in the implementations of the present application can achieve the following beneficial effects: An information item and an information item label are obtained, an information item label is matched with a label of a local account, and display processing is performed on a matched information item that has the same label as the account. As such, a user can quickly browse preferred content.

### BRIEF DESCRIPTION OF DRAWINGS

The accompanying drawings here are used to provide further understanding of the present application, and constitute a part of the present application. Example implementations of the present application and descriptions of the implementations are used to explain the present application, and do not constitute an improper limitation to the present application. In the accompanying drawings:
FIG. 1 is a block diagram illustrating a system for displaying a dynamic list, according to an implementation of the present application;
FIG. 2 is a schematic diagram illustrating matching an information item label with a label of a user account and marking an information item that has the same label as the user account, according to an implementation of the present application;
FIG. 3 is a schematic diagram illustrating highlighting a marked information item, according to an implementation of the present application;
FIG. 4 is a flowchart illustrating hierarchical displaying of a marked information item and a dynamic list, according to an implementation of the present application;
FIG. 5 is a schematic diagram illustrating hierarchical displaying of a marked information item and a dynamic list, according to an implementation of the present application;
FIG. 6 is a schematic diagram illustrating matching an information item label with a label of a user account, and selecting an information item that has the same label as the user account, according to an implementation of the present application;
FIG. 7 is a flowchart illustrating a method for displaying a dynamic list, according to an implementation of the present application;
FIG. 8 is a flowchart illustrating another method for displaying a dynamic list, according to an implementation of the present application;
FIG. 9 is a flowchart illustrating another method for displaying a dynamic list, according to an implementation of the present application;
FIG. 10 is a block diagram illustrating an apparatus for displaying a dynamic list, according to an implementation of the present application;
FIG. 11 is a block diagram illustrating a terminal device, according to an implementation of the present application;
FIG. 12 is a block diagram illustrating a mobile device, according to an implementation of the present application;
FIG. 13 is a block diagram illustrating a computer device, according to an implementation of the present application;
FIG. 14 is a block diagram illustrating a terminal device used in a means of transportation, according to an implementation of the present application; and
FIG. 15 is a schematic diagram illustrating a user interface system, according to an implementation of the present application.

### DESCRIPTION OF IMPLEMENTATIONS

To make the objectives, technical solutions, and advantages of the present application clearer, the following clearly and comprehensively describes the technical solutions of the present application with reference to the specific implementations and the corresponding accompanying drawings of the present application. Apparently, the described implementations are some rather than all of the implementations of the present application. All other implementations obtained by a person of ordinary skill in the art based on the implementations of the present application without creative efforts shall fall within the protection scope of the present application.

The technical solutions provided by the implementations of the present application are described in detail below with reference to the accompanying drawings.

In the implementations of the present application, labels are added to an information item posted by a user account and each user account. When refreshing a dynamic list, a terminal device obtains an information item posted by a second account followed by a first account that logs in locally and an information item label, and matches an information item label with a label of the first account. If there is the same label, the same label is used to mark an information item that has the same label as the first account, and the information item can also be distinctly displayed. For example, a highlighted method or a hierarchical method is used for displaying. Therefore, the information item is marked with the same label as the first account, and a user can browse preferred content more quickly when browsing the dynamic list.

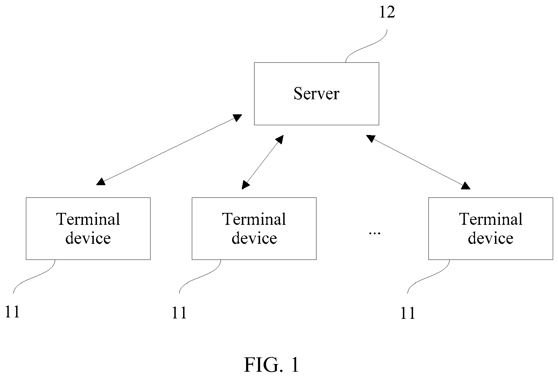

FIG. 1 illustrates a system for displaying a dynamic list, according to an implementation of the present application. The system includes a terminal device 11 and a server 12.

A user completes a login operation by using a user account in an application program running on the terminal device 11 or an open webpage. There is a mapping relationship between user accounts if a user account follows another. One user account can follow a plurality of other user accounts, and each user account can also be followed by a plurality of other user accounts. In this implementation of the present application, a user account that the terminal device 11 logs in is referred to as a first account, and other user accounts followed by the first account are collectively referred to as a second account.

The mapping relationship between user accounts is stored on the server 12. The terminal device 11 can locally store a list of second accounts followed by the first account, and update and maintain the list by using the server 12.

The terminal device 11 can be a mobile phone, a computer, a digital broadcast terminal device, a message transceiver device, a game console, a tablet device, a medical device, a fitness device, a personal digital assistant, etc, and the server 12 can be a server device provided by a developer, an operator of a website, or an application program.

After the user completes the login operation on the terminal device 11 by using the first account, a dynamic list in an application program or a browser interface can be displayed. The dynamic list is used to display an information item posted by the second account followed by the first account.

The server 12 further maintains a label library. The label library can directly include a plurality of labels. Alternatively, the label library can include a plurality of label types, and each label type further includes a plurality of labels.

A user who uses the second account posts a new information item by using another terminal device 11, and the newly posted information item is uploaded to the server 12. The server 12 can analyze content in the newly posted information item to determine a label corresponding to the information item. For example, the server 12 performs semantic analysis on text content in the information item, and matches the label to be added to the information item based on an analysis result. The server 12 can further perform feature identification on a picture in the information item to determine content of the picture and further obtain the label to be added to the information item. In addition, the server 12 can further determine the label corresponding to the information item based on attribute information of the information item. For example, the information item includes attributes such as price, location, and merchandise category, and the corresponding label can be added to the information item based on the attribute information.

After adding the label to the information item posted by the second account, the server 12 pushes, based on the stored mapping relationship between user accounts, the information item posted by the second account and the added label to the terminal device 11 where the first account following the second account is located.

When the terminal device 11, where the first account is located, refreshes the dynamic list, the terminal device 11 obtains the information item posted by the second account and the label of the information item. To refresh the dynamic list, the terminal device 11 can periodically request dynamic list data from the server 12 when the terminal device 11 is communicatively connected to the server 12. Alternatively, the terminal device 11 requests dynamic list data from the server 12 based on a user's operation on the terminal device 11. For example, the terminal device 11 requests latest dynamic list data from the server 12 when detecting that the user drags the dynamic list downwards.

The terminal device 11 matches the label of the information item with a label of the first account, to determine whether the information item has the same label as the first account.

A user account label can be added by the server 12. The label that the server 12 adds to the user account and the label that the server 12 adds to the information item can come from the same label library, to ensure that the two can be correctly matched. If the two come from different label libraries, a mapping relationship between different label libraries further needs to be established to ensure that the matching can be performed normally. The server 12 can perform statistical analysis on browsing behavior of each user account, determine content frequently browsed or searched by the user account, and determine a label to be added to the user account based on the content. As such, preferred content to each user account can be analyzed, and a label can be added to the user account based on the preferred content to the user account, so that a preferred information item to the user account can be matched for the user account subsequently.

A user account label can be added by a user. An application program or webpage client software running on the terminal device 11 also sets a label library corresponding to the server 12, and the user performs a selection operation on the terminal device 11 to determine the label to be added to the user account. As such, the user can have the right to select the label, and the user determines the account label used by the user, so that the user's right is better respected.

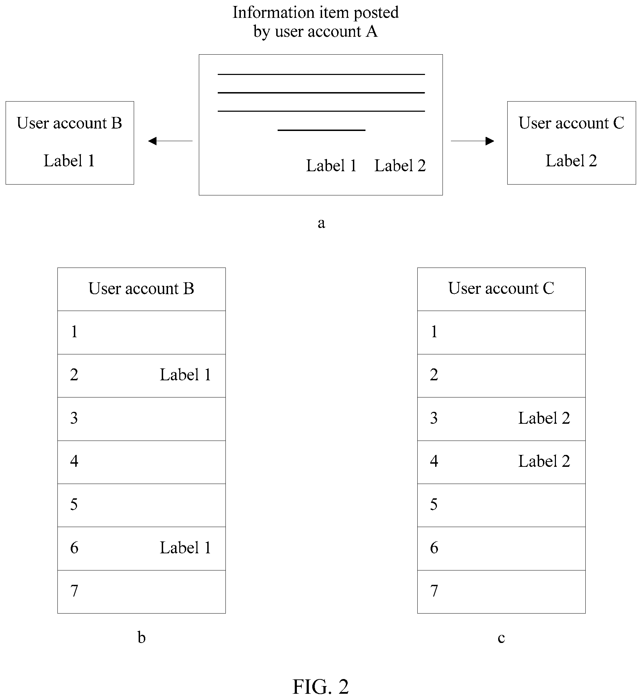

As shown in a in FIG. 2, label 1 and label 2 are added to information items posted by user account A in the server. Both user account B and user account C follow user account A, and the server distributes the information items to terminal devices where user account B and user account C are located. Label 1 is added to user account B, and label 2 is added to user account C. The terminal device where user account B is located matches the labels of the information items with the label of user account B, for the same label 1. The terminal device where user account C is located matches the labels of the information items with the label of user account C, for the same label 2. The same label of the information items and the user account is displayed in a dynamic list, and the corresponding information item is marked with the same label that is matched. As shown in b in FIG. 2, user account B has label 1, and the second information item and the sixth information item in a dynamic list of user account B have label 1. In this case, label 1 is displayed on locations of the second information item and the sixth information item, and the information items that have the same label as user account B are marked with the same label 1. As shown in c in FIG. 2, user account C has label 2, and the third information item and the fourth information item in a dynamic list of user account C have the same label 2. In this case, label 2 is displayed on locations of the third information item and the fourth information item, and the information items that have the same label as user account C are marked with the same label 2.

As such, the information item is marked with the same label that is matched, so that the user of the terminal device 11 can locate preferred content to the user by identifying labels.

In an implementation, the terminal device 11 can further distinctly display the information item that has the same label as the first account. The following methods are used to determine whether to distinctly display the information item.

AI. Determine, based on an interaction method of the user for the dynamic list, whether to distinctly display the information item that has the same label as the first account.

When the user performs interaction by using a touchscreen, if the terminal device 11 detects an operation of continuously dragging the dynamic list displayed on a screen, the terminal device 11 distinctly displays the information item that has the same label as the first account. For example, the terminal device 11 detects that the user drags the dynamic list upwards twice continuously.

Alternatively, when the user perform interaction by using an external device interface such as a key, a keyboard, and a mouse of the terminal device 11, if the terminal device 11 detects an operation of continuously scrolling the dynamic list displayed on a screen, the terminal device 11 distinctly displays the information item that has the same label as the first account. For example, when detecting that the user continuously scrolls the dynamic list by using a direction key of the terminal device, or continuously scrolls the dynamic list by using a direction key on the keyboard or a scroll wheel of the mouse, the terminal device distinctly displays the information item that has the same label as the first account.

Each of the previously described interaction methods indicates that the user wants to quickly browse an information item in the dynamic list, and the information item that has the same label as the first account is distinctly displayed so that the user can browse the preferred content more accurately in this quick browsing process.

A2. Determine whether to distinctly display the information item that has the same label as the first account based on a location where the information item is displayed on a screen.

Information items on the dynamic list can be scrolled in response to a user's operation. When an information item that has the same label as the first account is loaded and displayed in the dynamic list, it is determined whether a display location of the information item is located in the first entry of the current dynamic list. If the display location of the information item is located in the first entry of the current dynamic list, the information item is distinctly displayed.

Alternatively, a display area is predetermined on the screen, and the display area is an area that is determined based on a user's visual habit and can be directly seen by the user. For example, the area is the upper part of the screen, or the area is determined based on a height of the screen and a height of each information item in the dynamic list. For example, if a total of six information items can be displayed on the screen, a display area where the first four information items are located from top to bottom is used as the predetermined display area. When an information item that has the same label as the first account is loaded and displayed in the dynamic list, it is determined whether a display location of the information item falls within the predetermined display area. When the display location of the information item falls within the predetermined display area, the information item is distinctly displayed. Alternatively, when the display location of the information item falls beyond the predetermined display area, the next information item is loaded so that the information item move upwards to the predetermined display area, and then the information item is distinctly displayed.

In this method, the information item that has the same label as the first account can be distinctly displayed when the information item is located in the display area that can be browsed by the user, so that the user can browse the preferred content.

In addition, the methods for determining whether to distinctly display the information item based on the interaction method and the display location of the information item can be combined. In other words, the information item that has the same label as the first account is distinctly displayed when a user's operation of quickly browsing the dynamic list is detected and the information item that has the same label as the first account is located in the predetermined display area.

The information item can be distinctly displayed in the following methods:

B1. Highlight the information item that has the same label as the first account.

Display brightness of the dynamic list is controlled, to improve display brightness of the information item that has the same label as the first account, or reduce display brightness of an information item that does not have the same label as the first account, or both.

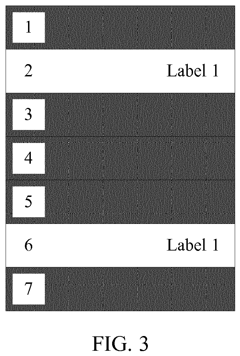

As such, the display brightness of the information item marked with the same label as the first account is greater than that of another information item. As shown in FIG. 3, the second information item and the sixth information item marked with the same label 1 are highlighted. Therefore, the user can intuitively view the information item that has the same label as the first account.

B2. Hierarchically display the information item that has the same label as the first account and the dynamic list.

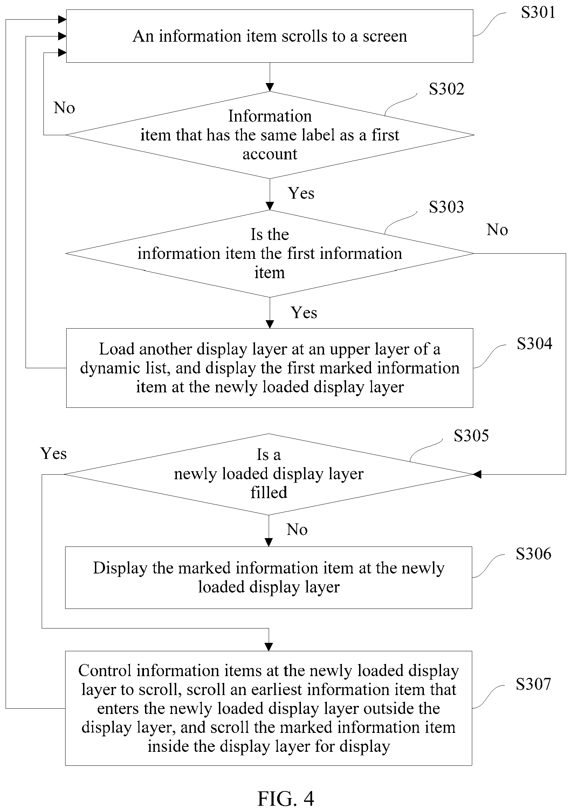

The information item marked with the same label as the first account is displayed at an upper layer of the dynamic list, so that the information item that has the same label as the first account can stand out from the original dynamic list. The process is shown in FIG. 4.

S301. An information item scrolls to a screen.

S302. Determine whether there is an information item that has the same label as a first account. When a determining result is yes, step S303 is performed; or when a determining result is no, step S301 is performed again.

S303. Determine whether the information item is the first information item that has the same label as the first account. When a determining result is yes, step S304 is performed; or when a determining result is no, step S305 is performed.

S304. Load another display layer at an upper layer of a dynamic list, display the first marked information item at the newly loaded display layer, and return to step S301.

S305. Determine whether the newly loaded display layer is filled. When a determining result is no, step S306 is performed; or when a determining result is yes, step S307 is performed.

S306. Display the marked information item at the newly loaded display layer, and return to step S301.

S307. Control information items at the newly loaded display layer to scroll, scroll an earliest information item that enters the newly loaded display layer outside the display layer, and scroll the marked information item inside the display layer for display; and return to step S301.

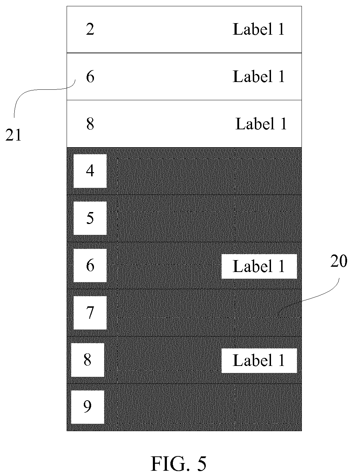

As shown in FIG. 5, a newly loaded display layer 21 is located at an upper layer of an original dynamic list 20, and the second information item, the sixth information item, and the eighth information item that have the same label as a user account in the original dynamic list 20 are displayed at the display layer 21. As more information items that have the same label as the user account scroll to a screen, information items displayed at the display layer 21 also gradually increase. When the display layer 21 is filled with information items that have the same label as the user account, an information item list at the display layer 21 also starts to scroll accordingly.

Whether the newly loaded display layer is filled can be determined by using a width of information items and a width of the newly loaded display layer. For example, a maximum of 10 information items can be simultaneously displayed on the screen, and nine information items can be simultaneously displayed at the newly loaded display layer. The number of information items that stand out from the dynamic list to the newly loaded display layer for display is calculated. When the number of information items that stand out to the newly loaded display layer is greater than or equal to 9, the information items start to scroll at the newly loaded display layer so that the first information item that stands out to the newly loaded display layer for display scrolls outside the display layer, and an information item that newly stands out scrolls to the display layer for display. When the number of information items that stand out to the newly loaded display layer for display is less than 9, the marked information item is directly displayed at the newly loaded display layer.

The information items that have the same label as the first account stand out from the dynamic list to the newly loaded display layer for display, so that the information items that have the same label as the first account are collected together for browsing so that the user can browse the preferred content more quickly.

B3. Combine B1 and B2 to highlight an information item at a newly loaded display layer so that display brightness of the original dynamic list is reduced accordingly.

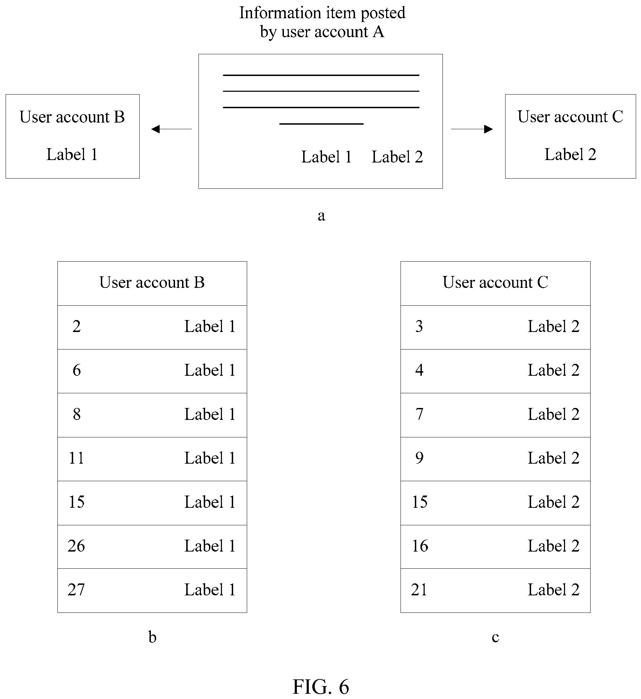

In another implementation, after the label of the information item is matched with the label of the user account, information items in the dynamic list are screened based on the same label that is matched, and the information item that has the same label as the user account is displayed as information in the dynamic list. As shown in a in FIG. 6, label 1 and label 2 are added to information items posted by user account A in the server. Both user account B and user account C follow user account A, and the server distributes the information items to terminal devices where user account B and user account C are located. Label 1 is added to user account B, and label 2 is added to user account C. The terminal device where user account B is located matches the labels of the information items with the label of user account B, for the same label 1. The terminal device where user account C is located matches the labels of the information items with the label of user account C, for the same label 2. In this case, as shown in b in FIG. 6, only information items that have the same label 1 are displayed in a dynamic list of user account B, and as shown in c in FIG. 6, only information items that have the same label 2 are displayed in a dynamic list of user account C. The information items in the dynamic list are screened by using the same label that is matched, and content related to the user account is displayed, so that the user can browse the preferred content more quickly.

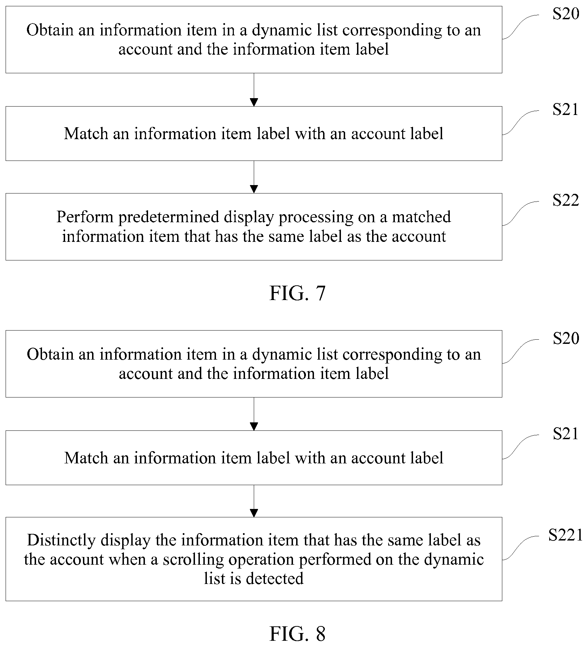

Based on the previous description, from the perspective of the terminal device 11, an implementation of the present application provides a method for displaying a dynamic list. As shown in FIG. 7, the method includes the following steps:
S20. Obtain an information item in a dynamic list corresponding to an account and the information item label.

S21. Match an information item label with an account label.

S22. Perform predetermined display processing on a matched information item that has the same label as the account.

Step S22 includes the following: displaying the same label of the information item and the account in the dynamic list (marking the corresponding information item by using the same label); distinctly displaying the information item that has the same label as the account when a scrolling operation performed on the dynamic list is detected; and displaying, as information in the dynamic list, the information item that has the same label as the account. As such, a user can quickly locate preferred content in the dynamic list.

In an implementation, step S22 further includes the following: displaying the same label of the information item and the account in the dynamic list. The corresponding information item is marked with the same label that is matched, so that the user can locate the preferred content.

In an implementation, step S22 further includes the following step. As shown in FIG. 8, in step S221, the information item that has the same label as the account is distinctly displayed when a scrolling operation performed on the dynamic list is detected.

When the scrolling operation is detected, it indicates that the user is browsing the dynamic list. In this case, when the information item that has the same label as the account is distinctly displayed, the user can quickly browse a preferred information item.

In an implementation, step S221 can further include the following: detecting an operation of continuously scrolling the dynamic list or an operation of continuously dragging the dynamic list on a screen; and distinctly displaying the information item that has the same label as the account.

When the user wants to quickly browse the dynamic list by performing a quick scrolling operation, if the information item that has the same label as the account is distinctly displayed, the user can quickly browse the preferred content, to improve browsing efficiency.

In an implementation, the distinctly displaying the information item in step S221 can further include the following: controlling display brightness of the dynamic list, so that display brightness of the information item that has the same label as the account is greater than that of another information item. An information item that the user may want to first browse is prompted through differentiation between display brightness.

In an implementation, the distinctly displaying the information item in step S221 can further include the following: hierarchically displaying the information item that has the same label as the account and the dynamic list, so that the information item that has the same label as the account is displayed at an upper layer of the dynamic list.

As such, the information item marked with the same label as the account stands out from the dynamic list, so that the user can focus on the information item marked with the same label as the account.

In an implementation, the hierarchical displaying method further includes the following: determining whether the information item is the first information item that has the same label as the account when the information item that has the same label as the account scrolls to a screen; and loading another display layer at the upper layer of the dynamic list, and displaying the first information item that has the same label as the account at the display layer when it is determined that the information item is the first information item that has the same label as the account; and determining whether the display layer is filled when another information item that has the same label as the account in the dynamic list scrolls to the screen; and controlling information items at the display layer to scroll when the display layer is filled, to scroll an earliest information item that enters the display layer outside the display layer, and scroll the another information item that has the same label as the account inside the display layer.

When the first marked information item appears, the hierarchical displaying is triggered. When there are many information items displayed at the newly loaded display layer, scrolling browsing is performed on the information items at the display layer.

In an implementation, the method for displaying a dynamic list can further include the following: receiving a label added by a server to the account; or receiving a label locally added by a user to the account. The label of the user account can be added by the server, or can be added by the user.

In an implementation, step S20 further includes the following: obtaining an information item posted by a second account followed by a first account that logs in locally, and a label added by a server to the information item based on content or an attribute of the information item. The label of the information item is added by the server based on the content or attribute information of the information item.

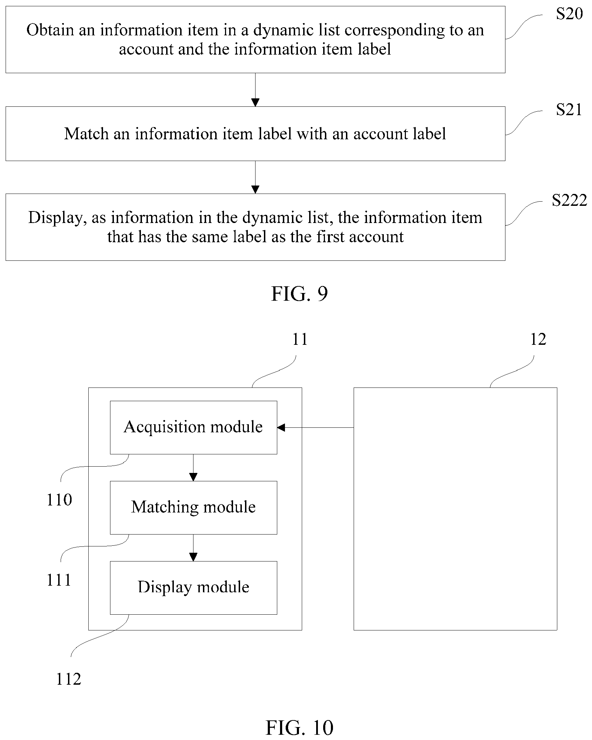

In another implementation, a method for displaying a dynamic list is further provided. As shown in FIG. 9, the method includes the following steps.

S20. Obtain an information item posted by a second account and an information item label followed by an account.

S21. Match an information item label with an account label.

S222. Display, as information in a dynamic list, the information item that has the same label as the first account.

In this implementation, information items in the dynamic list are screened by using the same label that is matched, and content related to the user account is displayed, so that a user can browse the preferred content more quickly.

The following apparatus implementations of the present application are used to perform the previously described method implementations of the present application.

As shown in FIG. 10, an implementation of the present application provides an apparatus for displaying a dynamic list. The apparatus is located on a terminal device side, and includes an acquisition module 110, configured to obtain an information item in a dynamic list corresponding to an account and an information item label; a matching module 111, configured to match an information item label with an account label; and a display module 112, configured to perform predetermined display processing on a matched information item that has the same label as the account.

In an implementation, the display module 112 further includes a first display submodule, configured to display the same label of the information item and the account in the dynamic list.

In an implementation, the display module 112 further includes a second display submodule, configured to distinctly display the information item that has the same label as the account when a scrolling operation performed on the dynamic list is detected.

In an implementation, the second display submodule further includes a detection unit, configured to detect an operation of continuously scrolling the dynamic list or an operation of continuously dragging the dynamic list on a screen; and a first display unit, configured to distinctly display the information item that has the same label as the account.

In an implementation, the second display submodule further includes a second display unit, configured to control display brightness of the dynamic list, so that display brightness of the information item that has the same label as the account is greater than that of another information item.

In an implementation, the second display submodule further includes a third display unit, configured to hierarchically display the information item that has the same label as the account and the dynamic list, so that the information item that has the same label as the account is displayed at an upper layer of the dynamic list.

In an implementation, the third display unit further includes a first determining subunit, configured to determine whether the information item is the first information item that has the same label as the account when the information item that has the same label as the account scrolls to a screen; and a first display subunit, configured to load another display layer at the upper layer of the dynamic list and display the first information item that has the same label as the account at the display layer, when it is determined that the information item is the first information item that has the same label as the account.

In an implementation, the third display unit further includes a second determining subunit, configured to determine whether the display layer is filled when another information item that has the same label as the account scrolls to the screen; and a second display subunit, configured to control information items at the display layer to scroll when the display layer is filled, to scroll an earliest information item that enters the display layer outside the display layer, and scroll the another information item that has the same label as the account inside the display layer.

In an implementation, the apparatus for displaying a dynamic list further includes a receiving module, configured to receive a label added by a server to the account; or receive a label locally added by a user to the account.

In an implementation, the acquisition module 110 further includes an acquisition submodule, configured to obtain an information item posted by a second account followed by a first account that logs in locally, and a label added by a server to the information item based on content or an attribute of the information item.

In an implementation, the display module 112 further includes a third display submodule, configured to display, as information in the dynamic list, the information item that has the same label as the account.

In addition, in this implementation of the present application, the previously described functional modules can be implemented by using a hardware processor.

An implementation of the present application further provides a terminal device, including a processor and a memory configured to store an instruction that can be executed by the processor. The instruction that can be executed by the processor includes the following: obtaining an information item in a dynamic list corresponding to an account and an information item label; matching an information item label with an account label; and performing predetermined display processing on a matched information item that has the same label as the account.

In an implementation, the performing predetermined display processing on a matched information item that has the same label as the account includes the following: displaying the same label of the information item and the account in the dynamic list.

In an implementation, the performing predetermined display processing on a matched information item that has the same label as the account includes the following: distinctly displaying the information item that has the same label as the account when a scrolling operation performed on the dynamic list is detected.

In an implementation, the distinctly displaying the information item that has the same label as the account when a scrolling operation performed on the dynamic list is detected includes the following: detecting an operation of continuously scrolling the dynamic list or an operation of continuously dragging the dynamic list on a screen; and distinctly displaying the information item that has the same label as the account.

In an implementation, the distinctly displaying the information item that has the same label as the account includes the following: controlling display brightness of the dynamic list, so that display brightness of the information item that has the same label as the account is greater than that of another information item.

In an implementation, the distinctly displaying the information item that has the same label as the account includes the following: hierarchically displaying the information item that has the same label as the account and the dynamic list, so that the information item that has the same label as the account is displayed at an upper layer of the dynamic list.

In an implementation, the hierarchically displaying the information item that has the same label as the account and the dynamic list, so that the information item that has the same label as the account is displayed at an upper layer of the dynamic list includes the following: determining whether the information item is the first information item that has the same label as the account when the information item that has the same label as the account scrolls to a screen; and loading another display layer at the upper layer of the dynamic list, and displaying the first information item that has the same label as the account at the display layer when it is determined that the information item is the first information item that has the same label as the account.

In an implementation, the hierarchically displaying the information item that has the same label as the account and the dynamic list, so that the information item that has the same label as the account is displayed at an upper layer of the dynamic list further includes the following: determining whether the display layer is filled when another information item that has the same label as the account scrolls to the screen; and controlling information items at the display layer to scroll when the display layer is filled, to scroll an earliest information item that enters the display layer outside the display layer, and scroll the another information item that has the same label as the account inside the display layer.

In an implementation, the instruction that can be executed by the processor further includes the following: receiving a label added by a server to the account; or receiving a label locally added by a user to the account.

In an implementation, the obtaining an information item posted by a second account followed by an account and an information item label includes the following: obtaining an information item posted by a second account followed by a first account that logs in locally, and a label added by a server to the information item based on content or an attribute of the information item.

In an implementation, the performing predetermined display processing on a matched information item that has the same label as the account includes the following: displaying, as information in the dynamic list, the information item that has the same label as the account.

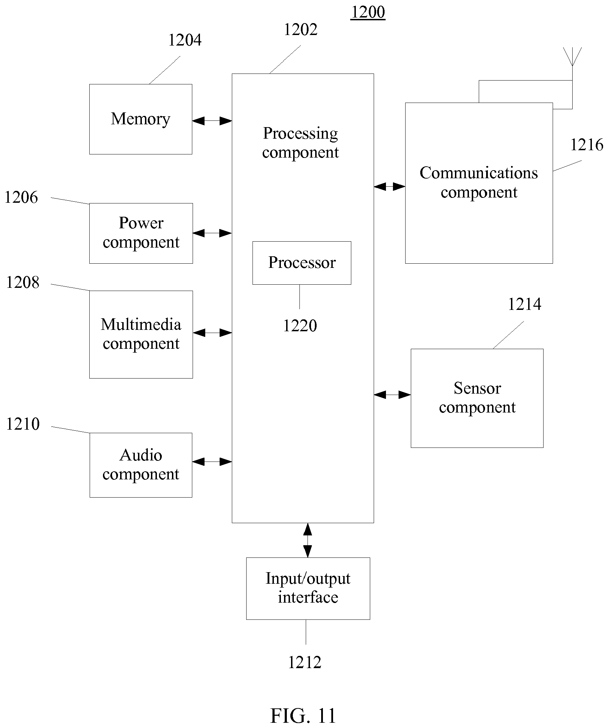

FIG. 11 is a block diagram illustrating a terminal device, provided in the previous implementation of the present application, according to an example implementation. For example, the terminal device 1200 can be a mobile phone, a computer, a digital broadcast terminal device, a message transceiver device, a game console, a tablet device, a medical device, a fitness device, or a personal digital assistant.

The terminal device 1200 can include one or more of the following components: a processing component 1202, a memory 1204, a power component 1206, a multimedia component 1208, an audio component 1210, an input/output (I/O) interface 1212, a sensor component 1214, and a communications component 1216.

The processing component 1202 usually controls operations of the terminal device 1200, for example, operations related to display, telephone calls, data communication, camera operations, and recording operations. The processing component 1202 can include one or more processors 1220 to execute an instruction, so as to complete all or some of the steps of the previously described method. In addition, the processing component 1202 can include one or more modules, so that the processing component 1202 can interact with another component. For example, the processing component 1202 can include a multimedia module, so that the multimedia component 1208 can interact with the processing component 1202.

The memory 1204 is configured to store various types of data to support operations in the device 1200. Examples of the data include an instruction for any application program or method to be operated on the terminal device 1200, contact data, phonebook data, a message, a picture, a video, etc. The memory 1204 can be implemented by any type of volatile or non-volatile storage device or a combination thereof, such as a static random access memory (SRAM), electrically erasable programmable read-only memory (EEPROM), an erasable programmable read only memory (EPROM), a programmable read-only memory (PROM), a read-only memory (ROM), a magnetic memory, a flash memory, a disk, or an optical disc.

The power component 1206 provides power for various components of the terminal device 1200. The power component 1206 can include a power management system, one or more power supplies, and another component that is associated with generation, management, and allocation of electric power for the terminal device 1200.

The multimedia component 1208 includes a screen that provides an output interface between the terminal device 1200 and a user. In some implementations, the screen can include a liquid crystal display (LCD) and a touch panel (TP). If the screen includes the touch panel, the screen can be implemented as a touchscreen, to receive an input signal from the user. The touch panel includes one or more touch sensors to sense touching, sliding, and a gesture on the touch panel. The touch sensor can not only sense a boundary of a touching or sliding operation, but also sense duration and pressure related to the touching or sliding operation. In some implementations, the multimedia component 1208 includes a front-facing camera and/or a rear-facing camera. When the device 1200 is in an operation mode such as a shooting mode or a video mode, the front-facing camera and/or the rear-facing camera can receive external multimedia data. Each front-facing camera or rear-facing camera can be a fixed optical lens system or has a focal length and an optical zoom capability.

The audio component 1210 is configured to output and/or input an audio signal. For example, the audio component 1210 includes a microphone (MIC). When the terminal device 1200 is in an operation mode such as a call mode, a recording mode, and a voice recognition mode, the microphone is configured to receive an external audio signal. The received audio signal can be further stored in the memory 1204 or sent by using the communications component 1216. In some implementations, the audio component 1210 further includes a speaker, configured to output an audio signal.

The I/O interface 1212 provides an interface between the processing component 1202 and a peripheral interface module. The peripheral interface module can be a keyboard, a tapping wheel, a button, etc. The button can include but is not limited to a home page button, a volume button, a start button, and a lock button.

The sensor component 1214 includes one or more sensors, configured to evaluate a status of each aspect of the terminal device 1200. For example, the sensor component 1214 can detect an on/off state of the device 1200, and relative locations of components. For example, the components are a display and a keypad of the terminal device 1200. The sensor component 1214 can further detect a location change of the terminal device 1200 or a component of the terminal device 1200, existence or non-existence of contact of the user with the terminal device 1200, orientation or acceleration/deceleration of the terminal device 1200, and a temperature change of the terminal device 1200. The sensor component 1214 can include a proximity sensor, configured to detect existence of a nearby object when there is no physical contact. The sensor component 1214 can further include an optical sensor such as a CMOS or CCD image sensor, used in an imaging application. In some implementations, the sensor component 1214 can further include an acceleration sensor, a gyro sensor, a magnetic sensor, a pressure sensor, or a temperature sensor.

The communications component 1216 is configured to facilitate communication between the terminal device 1200 and another device in a wired or wireless way. The terminal device 1200 can access a wireless network based on a communication standard, such as WiFi, 2G, or 3G, or a combination thereof. In an example implementation, the communications component 1216 receives a broadcast signal or broadcast related information from an external broadcast management system by using a broadcast channel. In an example implementation, the communications component 1216 further includes a near field communication (NFC) module, to facilitate short-range communication. For example, the NFC module can be implemented by using a radio frequency identification (RFID) technology, an infrared data association (IrDA) technology, an ultra-wideband (UWB) technology, a Bluetooth (BT) technology, and other technologies.

In an example implementation, the terminal device 1200 can be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic elements, to perform the previously described method for displaying a dynamic list.

An example implementation further provides a non-transitory computer readable storage medium including an instruction, for example, the memory 1204 including an instruction, and the instruction can be executed by the processor 1220 of the terminal device 1200 to complete the previously described method. For example, the non-transitory computer readable storage medium can be a ROM, a random access memory (RAM), a CD-ROM, a magnetic tape, a floppy disk, or an optical data storage device.

A non-transitory computer readable storage medium is provided. When an instruction in the storage medium is executed by the processor of the terminal device 1200, the terminal device 1200 can perform the previously described method for displaying a dynamic list.

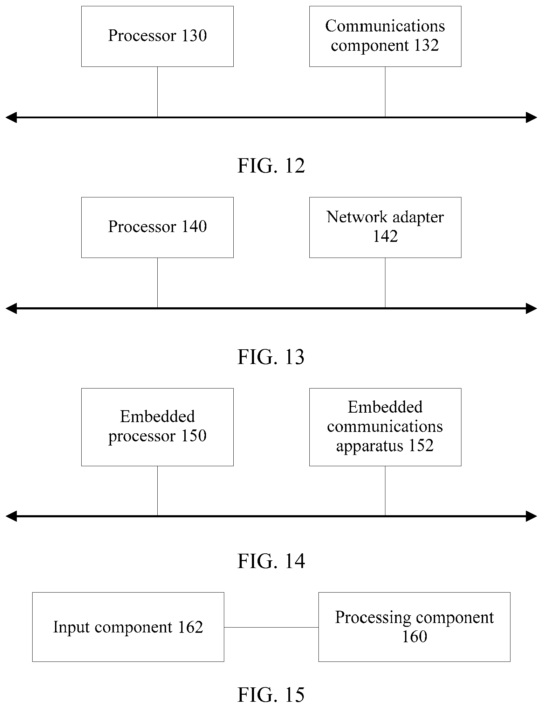

Based on the terminal device provided in the previous implementation of the present application, an implementation of the present application further provides a mobile device. As shown in FIG. 12, the mobile device includes a processor 130 and a communications component 132.

The processor 130 is coupled to the communications component 132. The communications component 132 obtains an information item in a dynamic list corresponding to an account and an information item label. The processor 130 matches an information item label with an account label, and performs predetermined display processing on a matched information item that has the same label as the account.

In an implementation, after matching the label of the information item with the account label, the processor 130 displays the same label of the information item and the account in the dynamic list.

In an implementation, after matching the label of the information item with the account label, the processor 130 displays, as information in the dynamic list, the information item that has the same label as the account.

In another implementation, after matching the label of the information item with the account label, the processor 130 distinctly displays the information item that has the same label as the account when detecting an instruction for performing a scrolling operation on the dynamic list.

An implementation of the present application further provides a computer device. As shown in FIG. 13, the computer device includes a processor 140 and a network adapter 142. The processor 140 is coupled to the network adapter 142. The network adapter 142 obtains an information item in a dynamic list corresponding to an account and an information item label. The processor 140 matches the label of the information item with an account label, and performs predetermined display processing on a matched information item that has the same label as the account.

In an implementation, after matching the label of the information item with the account label, the processor 140 displays the same label of the information item and the account in the dynamic list.

In an implementation, after matching the label of the information item with the account label, the processor 140 displays, as information in the dynamic list, the information item that has the same label as the account.

In another implementation, after matching the label of the information item with the account label, the processor 140 distinctly displays the information item that has the same label as the account when detecting an instruction for performing a scrolling operation on the dynamic list.

An implementation of the present application further provides a terminal device used in a means of transportation. As shown in FIG. 14, the terminal device includes an embedded processor 150 and an embedded communications apparatus 152.

In actual applications, the terminal device can be integrated into a central control system of the means of transportation, including but not limited to an in-vehicle device, a control device added to the means of transportation after delivery, etc. The terminal device can include other devices in addition to the embedded processor 150 and the embedded communications apparatus 152.

Depending on a type of the means of transportation where the terminal device is installed, the embedded processor 150 can be implemented by various application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic elements, and is configured to perform all or a part of the previously described method for displaying a dynamic list. The embedded processor 150 is coupled to the embedded communications apparatus 152 by using a line inside the means of transportation or a wireless connection. Based on solutions of all or some of the steps in the previously described method for displaying a dynamic list, the embedded processor 150 controls the terminal device used in a means of transportation to display a dynamic list.

Depending on a type of the means of transportation where the terminal device is installed, the embedded communications apparatus 152 can include a plurality of communications apparatuses. For example, if the means of transportation is a vehicle, the plurality of communications apparatuses include an in-vehicle antenna, an in-vehicle WiFi module, etc. The embedded communications apparatus 152 obtains an information item in a dynamic list corresponding to an account that logs in locally and an information item label.

The embedded processor 150 matches an information item label with an account label, and performs predetermined display processing on a matched information item that has the same label as the account.

Depending on a type of the means of transportation where the terminal device is installed, the terminal device used in a means of transportation can further include an embedded display apparatus. The embedded display apparatus can be various display devices used in the industry, for example, a touchscreen having a touch sensing function.

When the embedded display apparatus is implemented as a touchscreen, the embedded processor 150 distinctly displays the information item that has the same label as the first account when detecting a signal for performing a scrolling operation on the dynamic list.

In an implementation, after matching the label of the information item with the account label, the embedded processor 150 displays, as information in the dynamic list, the information item that has the same label as the first account.

In another implementation, after matching the label of the information item with the account label, the embedded processor 150 displays the same label of the information item and the account in the dynamic list.

FIG. 15 is a schematic diagram illustrating a user interface system, according to an implementation of the present application. As shown in FIG. 15, the user interface system includes a processing component 160 and an input component 162, and the processing component 160 is coupled to the input component 162.

The input component 162 is configured to obtain an information item in a dynamic list corresponding to an account and an information item label. The processing component 160 matches an information item label with an account label, and performs predetermined display processing on a matched information item that has the same label as the account. In an implementation, as shown in b and c in FIG. 2, matched information items are marked with the same label in the dynamic list.

In an implementation, after matching the label of the information item with the account label, the processing component 160 displays, as information in the dynamic list, the information item that has the same label as the first account. Information items obtained in the dynamic list are screened, as shown in b and c in FIG. 6. In this case, information items with the same label are displayed in the dynamic list after the screening.

In another implementation, after matching the label of the information item with the account label, the processing component 160 distinctly displays the information item that has the same label as the account when detecting an instruction for performing a scrolling operation on the dynamic list. A method for distinctly displaying the information item can be highlighting the information item that has the same label as the account. As shown in FIG. 3, information items that have the same label 1 are highlighted in the dynamic list. In addition, a method for distinctly displaying the information item can be hierarchically displaying the information item that has the same label as the account and the dynamic list. As shown in FIG. 5, information items that have the same label 1 are displayed at a newly loaded display layer 21, and the newly loaded display layer 21 is located above a dynamic list 20.

A person skilled in the art should understand that the implementations of the present application can be provided as a method, a system, or a computer program product. Therefore, the present application can use a form of hardware only implementations, software only implementations, or implementations with a combination of software and hardware. In addition, the present application can use a form of a computer program product that is implemented on one or more computer-usable storage media (including but not limited to a magnetic disk storage, a CD-ROM, and an optical memory) that include computer-usable program code.

The present application is described with reference to the flowcharts and/or block diagrams of the method, the device (system), and the computer program product according to the implementations of the present application. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer readable memory that can instruct the computer or the another programmable data processing device to work in a specific method, so that the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory can include a non-persistent storage, a random access memory (RAM), a nonvolatile memory, and/or another form in a computer readable medium, for example, a read-only memory (ROM) or a flash memory. The memory is an example of the computer readable medium.

The computer readable medium includes persistent, non-persistent, movable, and unmovable media that can implement information storage by using any method or technology. Information can be a computer readable instruction, a data structure, a program module, or other data. A computer storage medium includes but is not limited to a phase-change random access memory (PRAM), a static random access memory (SRAM), a dynamic random access memory (DRAM), a random access memory (RAM) of another type, a read-only memory, an electrically erasable programmable read-only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. Based on the definition in the present specification, the computer readable medium does not include transitory computer-readable media, for example, a modulated data signal and carrier.

It is worthwhile to further note that the term "include", "contain", or any other variant thereof is intended to cover a non-exclusive inclusion, so that a process, a method, an article, or a device that includes a list of elements not only includes those elements but also includes other elements which are not expressly listed, or further includes elements inherent to such a process, method, article, or device. An element preceded by "includes a..." does not, without more constraints, preclude the existence of additional identical elements in the process, method, article, or device that includes the element.

A person skilled in the art should understand that the implementations of the present application can be provided as a method, a system, or a computer program product. Therefore, the present application can use a form of hardware only implementations, software only implementations, or implementations with a combination of software and hardware. In addition, the present application can use a form of a computer program product that is implemented on one or more computer-usable storage media (including but not limited to a magnetic disk storage, a CD-ROM, and an optical memory) that include computer-usable program code.

The previous descriptions are merely implementations of the present application, and are not intended to limit the present application. For a person skilled in the art, the present application can have various modifications and changes. Any modifications, equivalent substitutions, improvements, etc. made in the spirit and principle of the present application shall fall within the scope of the claims in the present application.

## Claims

1. A method for displaying a dynamic list, comprising:
obtaining an information item in a dynamic list corresponding to an account and an information item label;
matching an information item label with an account label; and
performing predetermined display processing on a matched information item that has the same label as the account.

2. The method according to claim 1, wherein the performing predetermined display processing on a matched information item that has the same label as the account comprises:
displaying the same label of the information item and the account in the dynamic list.

3. The method according to claim 1, wherein the performing predetermined display processing on a matched information item that has the same label as the account comprises:
distinctly displaying the information item that has the same label as the account when a scrolling operation performed on the dynamic list is detected.

4. The method according to claim 3, wherein the distinctly displaying the information item that has the same label as the account when a scrolling operation performed on the dynamic list is detected comprises:
detecting an operation of continuously scrolling the dynamic list or an operation of continuously dragging the dynamic list on a screen; and
distinctly displaying the information item that has the same label as the account.

5. The method according to claim 3, wherein the distinctly displaying the information item that has the same label as the account comprises:
controlling display brightness of the dynamic list, so that display brightness of the information item that has the same label as the account is greater than that of another information item.

6. The method according to claim 3, wherein the distinctly displaying the information item that has the same label as the account comprises:
hierarchically displaying the information item that has the same label as the account and the dynamic list, so that the information item that has the same label as the account is displayed at an upper layer of the dynamic list.

7. The method according to claim 6, wherein the hierarchically displaying the information item that has the same label as the account and the dynamic list, so that the information item that has the same label as the account is displayed at an upper layer of the dynamic list comprises:
determining whether the information item is the first information item that has the same label as the account when the information item that has the same label as the account scrolls to a screen; and
loading another display layer at the upper layer of the dynamic list, and displaying the first information item that has the same label as the account at the display layer when it is determined that the information item is the first information item that has the same label as the account.

8. The method according to claim 7, wherein the hierarchically displaying the information item that has the same label as the account and the dynamic list, so that the information item that has the same label as the account is displayed at an upper layer of the dynamic list further comprises:
determining whether the display layer is filled when another information item that has the same label as the account scrolls to the screen; and
controlling information items at the display layer to scroll when the display layer is filled, to scroll an earliest information item that enters the display layer outside the display layer, and scroll the another information item that has the same label as the account inside the display layer.

9. The method according to claim 1, further comprising:
receiving a label added by a server to the account; or
receiving a label locally added by a user to the account.

10. The method according to claim 1, wherein the obtaining an information item in a dynamic list corresponding to an account and an information item label comprises:
obtaining an information item posted by a second account followed by a first account that logs in locally, and a label added by a server to the information item based on content or an attribute of the information item.

11. The method according to claim 1, wherein the performing predetermined display processing on a matched information item that has the same label as the account comprises:
displaying, as information in the dynamic list, the information item that has the same label as the account.

12. A terminal device, comprising a processor and a memory configured to store an instruction that can be executed by the processor, wherein
the instruction that can be executed by the processor comprises:
obtaining an information item in a dynamic list corresponding to an account and an information item label;
matching an information item label with an account label; and
performing predetermined display processing on a matched information item that has the same label as the account.

13. The terminal device according to claim 12, wherein the performing predetermined display processing on a matched information item that has the same label as the account comprises:
displaying the same label of the information item and the account in the dynamic list.

14. The terminal device according to claim 12, wherein the performing predetermined display processing on a matched information item that has the same label as the account comprises:
distinctly displaying the information item that has the same label as the account when a scrolling operation performed on the dynamic list is detected.

15. The terminal device according to claim 14, wherein the distinctly displaying the information item that has the same label as the account comprises:
hierarchically displaying the information item that has the same label as the account and the dynamic list, so that the information item that has the same label as the account is displayed at an upper layer of the dynamic list.

16. The terminal device according to claim 15, wherein the hierarchically displaying the information item that has the same label as the account and the dynamic list, so that the information item that has the same label as the account is displayed at an upper layer of the dynamic list comprises:
determining whether the information item is the first information item that has the same label as the account when the information item that has the same label as the account scrolls to a screen; and
loading another display layer at the upper layer of the dynamic list, and displaying the first information item that has the same label as the account at the display layer when it is determined that the information item is the first information item that has the same label as the account.

17. The terminal device according to claim 16, wherein the hierarchically displaying the information item that has the same label as the account and the dynamic list, so that the information item that has the same label as the account is displayed at an upper layer of the dynamic list further comprises:
determining whether the display layer is filled when another information item that has the same label as the account scrolls to the screen; and
controlling information items at the display layer to scroll when the display layer is filled, to scroll an earliest information item that enters the display layer outside the display layer, and scroll the another information item that has the same label as the account inside the display layer.

18. The terminal device according to claim 12, wherein the performing predetermined display processing on a matched information item that has the same label as the account comprises:
displaying, as information in the dynamic list, the information item that has the same label as the account.

19. A mobile device, comprising a processor and a communications component, wherein
the processor is coupled to the communications component;
the communications component is configured to obtain an information item in a dynamic list corresponding to an account and an information item label; and
the processor is configured to match an information item label with an account label, and perform predetermined display processing on a matched information item that has the same label as the account.

20. A computer device, comprising a processor and a network adapter, wherein
the processor is coupled to the network adapter;
the network adapter is configured to obtain an information item in a dynamic list corresponding to an account that logs in locally and an information item label; and
the processor is configured to match an information item label with an account label, and perform predetermined display processing on a matched information item that has the same label as the account.

21. A terminal device used in a means of transportation, comprising an embedded processor and an embedded communications apparatus, wherein
the embedded processor is coupled to the embedded communications apparatus;
the embedded communications apparatus is configured to obtain an information item in a dynamic list corresponding to an account and an information item label; and
the embedded processor is configured to match an information item label with an account label, and perform predetermined display processing on a matched information item that has the same label as the account.

22. A user interface system, comprising a processing component and an input component, wherein
the processing component is coupled to the input component;
the input component is configured to obtain an information item in a dynamic list corresponding to an account and an information item label; and
the processing component is configured to match an information item label with an account label, and perform predetermined display processing on a matched information item that has the same label as the account.

23. An apparatus for displaying a dynamic list, comprising:
an acquisition module, configured to obtain an information item in a dynamic list corresponding to an account and an information item label;
a matching module, configured to match an information item label with an account label; and
a display module, configured to perform predetermined display processing on a matched information item that has the same label as the account.

24. The apparatus according to claim 23, wherein the display module comprises:
a first display submodule, configured to display the same label of the information item and the account in the dynamic list.

25. The apparatus according to claim 23, wherein the display module comprises:
a second display submodule, configured to distinctly display the information item that has the same label as the account when a scrolling operation performed on the dynamic list is detected.

26. The apparatus according to claim 25, wherein the second display submodule comprises:
a third display unit, configured to hierarchically display the information item that has the same label as the account and the dynamic list, so that the information item that has the same label as the account is displayed at an upper layer of the dynamic list.

27. The apparatus according to claim 26, wherein the third display unit comprises:
a first determining subunit, configured to determine whether the information item is the first information item that has the same label as the account when the information item that has the same label as the account scrolls to a screen; and
a first display subunit, configured to load another display layer at the upper layer of the dynamic list, and display the first information item that has the same label as the account at the display layer when it is determined that the information item is the first information item that has the same label as the account.

28. The apparatus according to claim 27, wherein the third display unit further comprises:
a second determining subunit, configured to determine whether the display layer is filled when another information item that has the same label as the account scrolls to the screen; and
a second display subunit, configured to control information items at the display layer to scroll when the display layer is filled, to scroll an earliest information item that enters the display layer outside the display layer, and scroll the another information item that has the same label as the account inside the display layer.

29. The apparatus according to claim 23, wherein the display module comprises:
a third display submodule, configured to display, as information in the dynamic list, the information item that has the same label as the account.
